Europäisches Patentamt

European Patent Office

Office européen des brevets

(11) Numéro de publication: **0 310 725**
**A1**

(12) **DEMANDE DE BREVET EUROPEEN**

(21) Numéro de dépôt: **87402235.3**

(22) Date de dépôt: **07.10.87**

(51) Int. Cl.⁴: **F16J 15/12 , F16L 23/00**

(43) Date de publication de la demande:
**12.04.89 Bulletin 89/15**

(84) Etats contractants désignés:
**AT BE CH DE ES FR GB GR IT LI LU NL SE**

(71) Demandeur: **Société des Joints Industriels
IMPERATOR
Route de Vendôme
F-41290 Oucques(FR)**

(72) Inventeur: **Suzanne, Claude
6, rue Adrien Thibault
F-41260 La Chaussee Saint Victor(FR)**

(74) Mandataire: **Netter, André et al
Cabinet NETTER 40, rue Vignon
F-75009 Paris(FR)**

(54) **Joint d'étanchéité composite métal-graphite.**

(57) Joint annulaire d'étanchéité formé d'un anneau plat (1) en matière dure recouvert d'une couche annulaire (3) de graphite expansé sur chacune de ses faces (2).

## FIG.1

Xerox Copy Centre

## Joint d'étanchéité composite métal-graphite

L'invention concerne un joint annulaire d'étanchéité composé d'une matière dure et d'une matière tendre.

On connaît de tels joints du type spiralé, dans lesquels la matière dure et la matière tendre constituent des spires alternées autour de l'ouverture centrale du joint. Dans ces joints, la matière dure est notamment un métal et la matière tendre du graphite expansé ou flexible, c'est-à-dire du graphite dont la structure cristalline a été dilatée par action chimique pour lui conférer de la souplesse.

Le graphite expansé présente une excellente tenue chimique dans un intervalle de température extrêmement large, et ses propriétés physiques restent stables dans le temps même en cas de variations de température.

Les joints spiralés sont utilisés dans divers domaines, et notamment pour les corps de vannes et pour les brides.

Malheureusement, leur structure ne permet pas de tirer pleinement parti des propriétés du graphite expansé. Leur déformation n'est pas toujours prévisible, de sorte qu'ils ne donnent pas entière satisfaction.

Le but de l'invention est de remédier à cet inconvénient.

L'invention propose à cet effet un joint annulaire d'étanchéité composé d'une matière dure et de graphite expansé, caractérisé en ce qu'il comprend un anneau plat en matière dure recouvert d'une couche annulaire de graphite sur une partie au moins de chacune de ses faces.

De préférence, les couches de graphite sont collées sur l'anneau plat.

Dans le cas où les couches de graphite ne recouvrent pas la totalité des faces de l'anneau plat, une fraction de leur épaisseur est de préférence logée dans des lamages des faces de l'anneau plat, ces lamages pouvant être adjacents au bord périphérique de l'anneau plat ou à l'ouverture centrale de celui-ci, ou encore être distants à la fois du bord périphérique et de l'ouverture centrale.

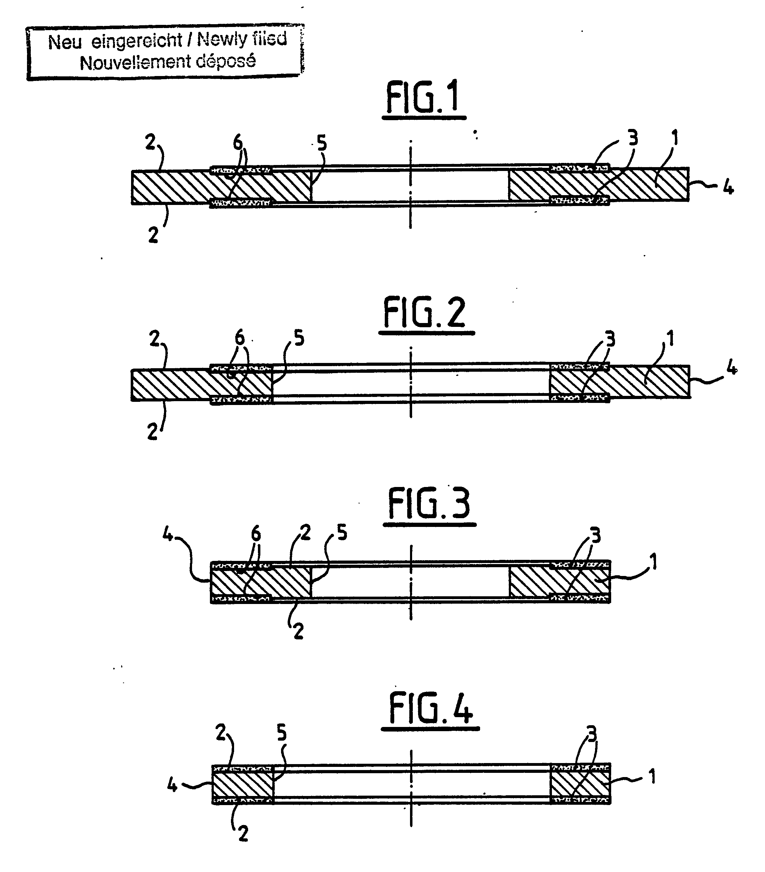

D'autres caractéristiques et avantages de l'invention ressortiront de la description détaillée donnée ci-après de quelques modes de réalisation de l'invention, et des dessins annexés, dans lesquels les figures 1 à 4 sont des vues en coupe axiale de quatre joints selon l'invention.

Les joints représentés sont formés chacun d'un anneau plat métallique 1 recouvert sur chacune de ses faces 2 d'une couche annulaire de graphite expansé 3. L'anneau 1 est limité radialement par un bord périphérique 4 et par une ouverture centrale 5.

Les couches de graphite 3 sont d'une épaisseur uniforme qui dans de nombreux cas peut être limitée à quelques dixièmes de millimètre, par exemple 0,8mm environ.

Dans les joints des figures 1 à 3, les couches de graphite ne recouvrent qu'une partie annulaire des faces de l'anneau 1, cette partie étant distante à la fois du bord péri phérique 4 et de l'ouverture centrale 5 à la figure 1, adjacente à l'ouverture 5 à la figure 2 et adjacente au bord 4 à la figure 3. Dans les trois cas, une fraction de l'épaisseur des couches de graphite est logée dans des lamages 6 ménagés dans les faces 2 et s'étendant sur la partie de ces faces recouverte par le graphite. Ces lamages ont une profondeur uniforme qui peut correspondre environ à la moitié de l'épaisseur des couches de graphite, l'anneau 1 ayant par ailleurs lui aussi une épaisseur uniforme.

Dans le cas de la figure 4, l'anneau 1 a une épaisseur uniforme et ses faces 2 sont entièrement recouvertes par les couches de graphite 3.

Le métal de l'anneau 1 est choisi en fonction de l'application envisagée. Il peut s'agir notamment d'un acier inoxydable ou de cuivre. Bien entendu des matières dures non métalliques peuvent également être utilisées

Pour réaliser le joint selon l'invention, on usine d'une part l'anneau 1 avec ses lamages éventuels, et on découpe d'autre part les couches de graphite 6, par exemple dans une feuille commercialisée par UNION CARBIDE sous la marque GRAFOIL. On met en place ensuite les couches de graphite aux endroits voulus de l'anneau 1, après y avoir déposé de la colle si on le souhaite de façon à éviter toute séparation avant le montage du joint sur son site de fonctionnement. Le joint selon l'invention peut remplacer les joints spiralés dans toutes leurs applications, notamment pour faces surélevées avec centrages intérieur et extérieur (fig.1), pour faces surélevées avec centrage extérieur (fig.2), pour faces surélevées avec centrage extérieur (fig.3), pour emboîtement simple ou double (fig.4).

## Revendications

1. Joint annulaire d'étanchéité composé d'une matière dure et de graphite expansé, caractérisé en ce qu'il comprend un anneau plat (1) en matière dure recouvert d'une couche annulaire de graphite (3) sur une partie au moins de chacune de ses faces (2).

2. Joint selon la revendication 1, caractérisé en ce que les couches de graphite sont collées sur l'anneau plat.

3. Joint selon l'une des revendications 1 et 2, caractérisé en ce qu'une fraction de l'épaisseur des couches de graphite et logée dans des lamages (6) des faces de l'anneau plat.

4. Joint selon la revendication 3, caractérisé en ce que les lamages sont adjacents au bord périphérique (4) de l'anneau plat.

5. Joint selon la revendication 3, caractérisé en ce que les lamages sont adjacents à l'ouverture centrale (5) de l'anneau plat.

6. Joint selon la revendication 3, caractérisé en ce que les lamages sont distants à la fois du bord périphérique et de l'ouverture centrale de l'anneau plat.

7. Joint selon l'une des revendications précédentes, caractérisé en ce que l'anneau plat est métallique.

Neu eingereicht / Newly filed
Nouvellement déposé

## FIG.1

## FIG.2

## FIG.3

## FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 517 789  (LATTY)<br>* Figures 1-4; revendications 1,2 *<br>--- | 1-4,6,7 | F 16 J  15/12<br>F 16 L  23/00 |
| . A | GB-A-2 131 497  (SIBEX)<br>* Figures 3,4; page 2, lignes 8-12 *<br>----- | 5 | |

### DOMAINES TECHNIQUES RECHERCHES (Int. Cl.4)

F 16 J
F 16 L

Le présent rapport a été établi pour toutes les revendications

| Lieu de la recherche | Date d'achèvement de la recherche | Examinateur |
|---|---|---|
| LA HAYE | 07-06-1988 | NARMINIO A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)